# EUROPEAN PATENT APPLICATION

(11) **EP 4 852 604 A2**
(43) Date of publication of application: **09.12.2026**
(21) Application number: 26183263.8
(22) Date of filing: 05.06.2026
(51) Int. Cl.: H04W 76/16, H04W 76/15, H04W 88/06

(54) **METHOD FOR COORDINATING USER EQUIPMENT CAPABILITIES FOR DUAL PROTOCOL STACK**

(30) Priority: 04.06.2025 US 202563817436 P; 13.05.2026 US 202619675979
(71) Applicant: Samsung Electronics Co., Ltd., Suwon-si, Gyeonggi-do 16677 (KR)
(72) Inventor: HEO, Youn Hyoung, San Jose, CA, 95134 (US); AWADIN, Mohamed Mokhtar Gaber Moursi, San Jose, CA, 95134 (US); BAE, Jung Hyun, San Jose, CA, 95134 (US)
(74) Representative: Kuhnen & Wacker Patent- und Rechtsanwaltsbüro PartG mbB

(57) **Abstract**

A system and a method are disclosed for coordination of user equipment (UE) capabilities for dual protocol stack. The method can comprise connecting, by a UE (204) to a new radio (NR) gNodeB (gNB) and a radio access technology (RAT) node; and sending, by the UE (204) to the NR gNB and/or the 6G RAT node (202), information related to capability restriction of the UE (204). In another embodiment, a method comprises sending (312) dual protocol information, by a core network (CN) (302) to a UE (204), an NR gNB, and/or a RAT node (202), wherein the UE (204) is connected to the NR gNB and the 6G RAT node (202).

## Description

### TECHNICAL FIELD

The disclosure generally relates to wireless technology. More particularly, the subject matter disclosed herein relates to improvements to dual protocol stack for 5G-6G migration.

### SUMMARY

Dual protocol stack has been proposed as an option for migration from 5^{th}-generation (5G) to 6^{th}-generation (6G) cellular technology. Dual connectivity may be complicated and may result in multiple architecture options, which may potentially delay commercialization of 6G. Accordingly, dual protocol stack has been proposed as an alternative to dual connectivity.

However, in dual protocol stack, it may be challenging to coordinate capabilities between new radio (NR) and 6G radio access technology (RAT), since the connections are expected to be independent and minimal coordination and interaction are expected between NR gNBs and 6G nodes. However, from a user equipment's (UE's) perspective, coordination between NR and 6G would be required because some capabilities are affected depending on operation in both RATs (e.g., whether both RATs are operated, how much data is transmitted/received, how many radio frequency (RF) chains or antennas are used in each RAT, or the like).

To overcome these issues, systems and methods are described herein for capability coordination between 5G NR and 6G RAT in dual protocol stack operation. The embodiments can be designed differently depending what approach or what level coordination is considered. In addition, an embodiment considers new aspects of the dual protocol stack compared to existing operations, including network assisted coordination that leverages core network (CN) awareness of two connections, as well as the supported service/data rate over NR and 6G RAT.

The above approaches improve on previous methods because they enable coordination among an NR gNB, 6G RAT node, a UE, and/or a core network (CN) so that UE capabilities (e.g., resources) can be shared and/or restricted in an optimal way.

In an embodiment, a method comprises connecting, by a UE to an NR gNodeB (gNB) and a 6G RAT node; and sending, by the UE to the NR gNB and/or the 6G RAT node, information related to capability restriction of the UE.

In another embodiment, a method comprises sending dual protocol information, by a core network (CN) to a UE, an NR gNB, and/or a 6G RAT node, wherein the UE is connected to the NR gNB and the 6G RAT node.

In another embodiment, a UE comprises at least one processor; and memory that stores instructions, which when executed by the at least one processor, controls the UE to: connect to a new radio (NR) gNodeB (gNB) and a 6G radio access technology (RAT) node; and send, to the NR gNB and/or the 6G RAT node, information related to capability restriction of the UE.

### BRIEF DESCRIPTION OF THE DRAWING

In the following section, the aspects of the subject matter disclosed herein will be described with reference to exemplary embodiments illustrated in the figures, in which:
FIG. 1A is a system diagram illustrating a wireless network with dual connectivity for 5G and 6G.
FIG. 1B is a system diagram illustrating a wireless network with dual protocol stack for 5G and 6G.
FIG. 2 is a communication flow diagram illustrating an example method for coordination of UE capabilities by UE capability restriction, according to an embodiment.
FIG. 3 is a communication flow diagram illustrating an example method for coordination of UE capabilities by CN-based UE capability restriction, according to an embodiment.
FIG. 4 is a communication flow diagram illustrating an example method for coordination of UE capabilities by radio access network (RAN)-controlled UE capability restriction, according to an embodiment.
FIG. 5A is a communication flow diagram illustrating an example method for coordination of UE capabilities using a multi-profile of UE capabilities, according to an embodiment.
FIG. 5B is a communication flow diagram illustrating an example method for coordination of UE capabilities by a CN using a multi-profile of UE capabilities, according to an embodiment.
FIG. 6 is a block diagram of an electronic device in a network environment, according to an embodiment.
FIG. 7 shows a system including a UE and a gNB in communication with each other.

### DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

Dual protocol stack has been proposed as an option for migration from 5G to 6G cellular technology. In 5G, in order to utilize 5G in the beginning of deployment, evolved universal mobile telecommunications system (UMTS) terrestrial radio access (E-UTRA) / new radio (NR) dual connectivity (EN-DC) was introduced. In EN-DC (e.g., dual connectivity), the UE can be connected to both 3^{rd} generation (3G) E-UTRA and an NR cell and data is aggregated at the Packet Data Convergence Protocol (PDCP) level. The NR cell is used as a booster cell, while E-UTRA can be responsible for mobility including handover (HO).

However, EN-DC is complicated and results in multiple architecture options, which delayed commercialization of the 5G system. Accordingly, dual protocol stack has been proposed as an alternative to dual connectivity.

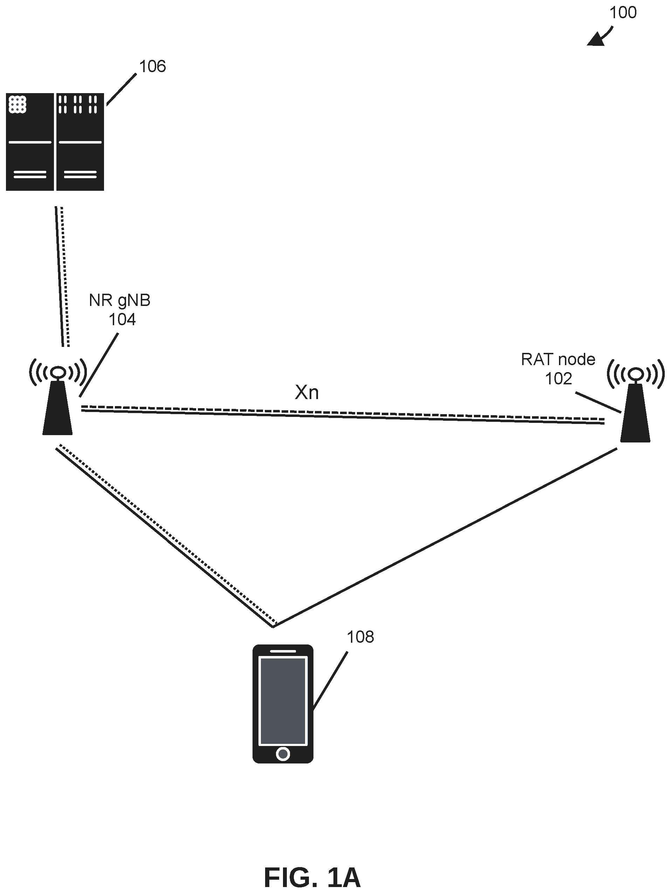

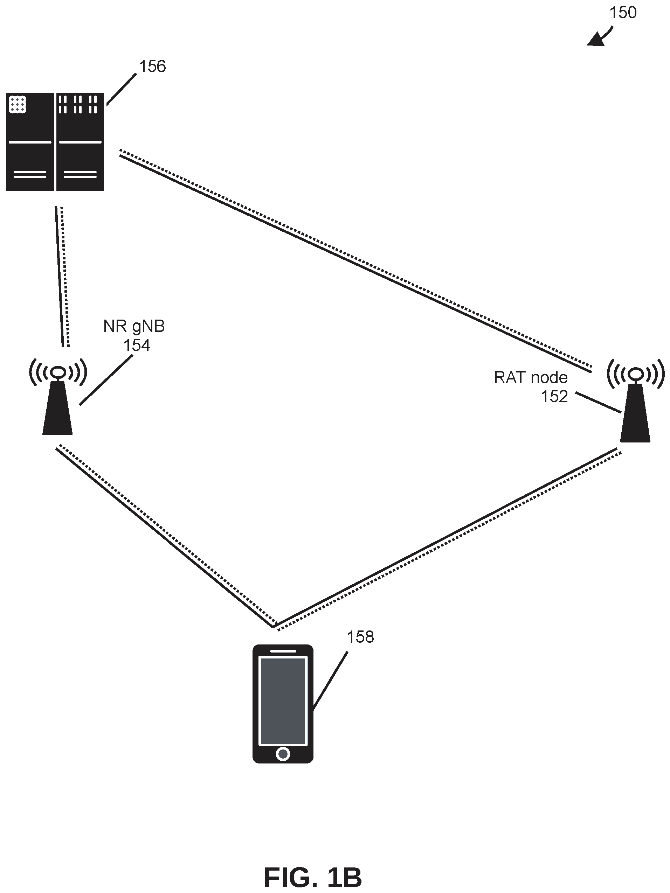

FIG. 1A is a system diagram illustrating a wireless network 100 with dual connectivity for 5G and 6G. FIG. 1B is a system diagram illustrating a wireless network 150 with dual protocol stack for 5G and 6G.

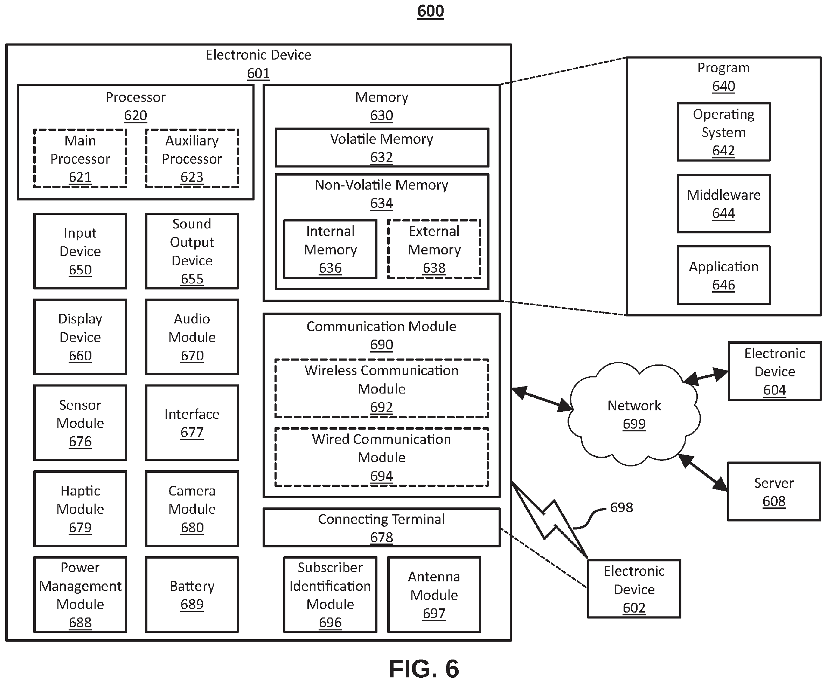

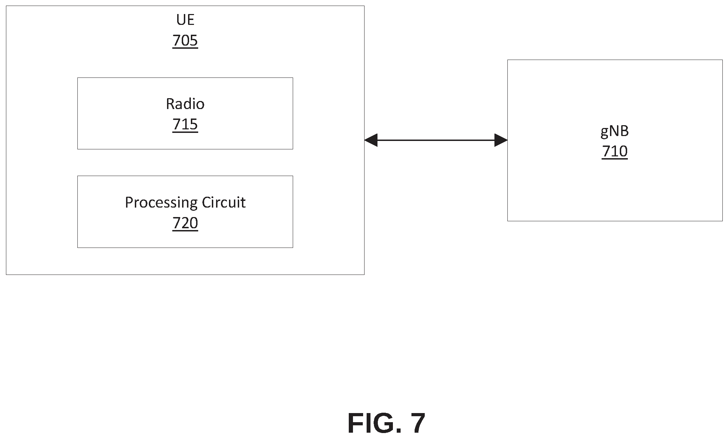

Referring to FIG. 1A, a CN 106 (e.g., a Fifth Generation Core Network (5GC), evolved 5GC, or Sixth Generation Core Network (6GC)) can serve a 5G NR gNB 104, which can be in communication with a 6G RAT node 102 (also referred to herein as a 6G base station). A UE 108, for example, a 6G-capable and/or 5G-capable UE, may connect to either or both of 5G NR gNB 104 and 6G RAT node 102. The UE 108 may correspond to the electronic device 601 of FIG. 6, and/or to the UE 705 of FIG. 7. The 5G NR gNB 104 may correspond to the gNB 710 of FIG. 7.

Referring to FIG. 1B, a CN 156 (e.g., a 5GC, evolved 5GC, or 6GC) can serve both a 5G NR gNB 154 and a 6G RAT node 152 (e.g., 6G base station). A UE 158, for example, a 6G-capable and/or 5G-capable UE, may connect to either or both of 5G NR gNB 154 and 6G RAT node 152. The UE 158 may correspond to the electronic device 601 of FIG. 6, and/or to the UE 705 of FIG. 7. The 5G NR gNB 154 may correspond to the gNB 710 of FIG. 7.

The main differences between wireless network 100 with dual connectivity and wireless network 150 with dual protocol stack are the data aggregation and/or splitting point, access to nodes, and coordination between the 5G gNB and 6G RAT node.

With regard to the data aggregation and/or splitting point, in dual connectivity 100, data can be aggregated and split in the 5G NR gNB 104, more specifically at the PDCP layer. As shown, the 5G NR gNB 104 can transmit data directly to and from the CN 106, and this data can be aggregated and/or split at 5G NR gNB 104. The 6G RAT node 102 can transmit data to and from one of the streams split off at the 5G NR gNB 104 splitting point.

By contrast, in dual protocol stack 150, data aggregation, split, and/or switching can be handled at the CN 156. As shown, both the 5G NR gNB 154 and the 6G RAT node 152 can transmit data directly to and from the CN 156, where the data can be aggregated and/or split. The UE 158 can send and receive data from both 5G NR gNB 154 and 6G RAT node 152.

With regard to access to nodes, in dual connectivity 100, the UE 108 initially may access 5G exclusively. As illustrated, if dual connectivity is needed, connection between UE 108 and the 6G RAT node 102 can be added as a secondary cell group.

By contrast, in dual protocol stack 150, it is anticipated that UE 158 will be able to access both 5G and 6G independently. As shown, the UE 158 can communicate with 5G NR gNB 154 and 6G RAT node 152 independently. In various examples, this communication may be based on single subscriber identification module (SIM) and dual registration, or on dual SIM and dual registration.

With regard to coordination between the 5G gNB and 6G node (e.g., base station), in dual connectivity 100, very tight coordination between the 5G NR gNB 104 and 6G RAT node 102 may be required. In particular, connection management and mobility may be mainly performed by the 5G gNB, assuming EN-DC like operation is applied. Such tight coordination may be very complicated and challenging, especially if the 5G NR gNB 104 and 6G RAT node 102 are supplied by different network (NW) vendors.

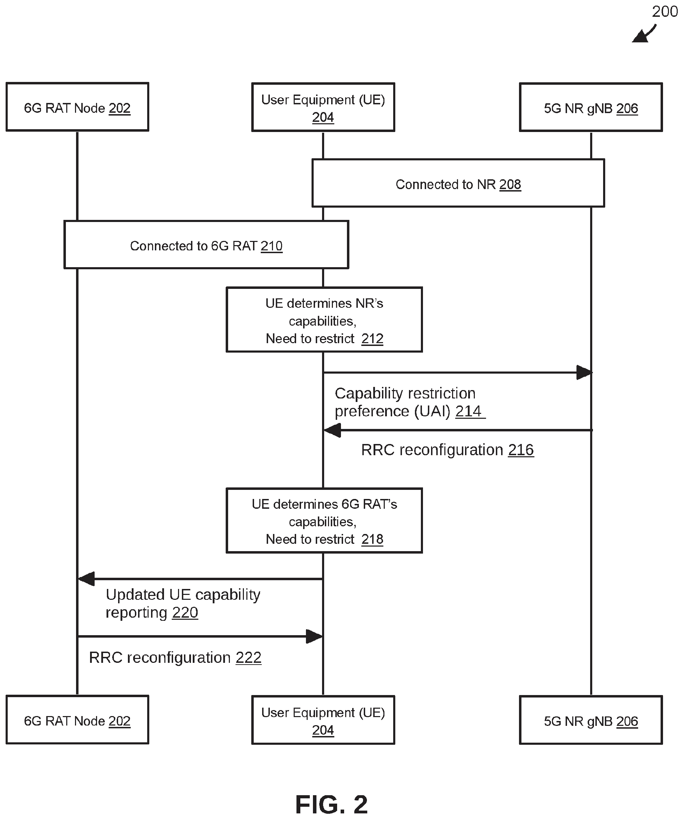

By contrast, in dual protocol stack 150, the UE 158 can be connected separately to 5G and 6G. Thus, ideally, no coordination is necessary between the 5G NR gNB 154 and 6G RAT node 152. However, while the 5G NR gNB 154 and 6G RAT node 152 can control connection and data transfer independently with a UE 158 that supports 5G and 6G simultaneously, it is anticipated that the resources and capabilities of UE 158 still need to be coordinated. The disclosed embodiments can address this challenge by providing methods for capability coordination between 5G NR and 6G RAT in dual protocol stack operation, as described below in the examples of FIGS. 2-4, 5A, and 5B.

Some NR systems support enhancements for Multi-Universal Subscriber Identity Module (MUSIM) device operation. A MUSIM-capable UE (also referred to as a MUSIM device) can be connected to two different networks concurrently. In particular, such a MUSIM-capable UE can support multiple transceiver chains, and may also support radio resource control (RRC) connections with two networks independently. However, the overall capability may be limited depending on how much data rate or configuration is configured by the two networks. For example, although a UE may support 8 layers for multiple-input and multiple-output (MIMO) if the UE is connected to one network, the same UE may only support 4 layers if both networks configure MIMO for that UE.

In order to handle the overall UE capability limitation across two networks for MUSIM device UE, some UE assistance reporting has been introduced. A MUSIM device in RRC_CONNECTED state in Network A may indicate its preference on temporary UE capability restriction or removal of restriction via UE assistance information with Network A when the MUSIM device needs transmission or reception in Network B (e.g., including start/stop connection to Network B).

When configured to do so, a MUSIM device can indicate one or more of the following temporary capability restriction or removal of restriction to the Network A: secondary cell(s) (SCell(s)) or SCell group (SCG) to be released; its preference for temporary maximum MIMO layers and/or supported channel bandwidth for specific serving cells for both uplink (UL) and downlink (DL); its preference for the temporary maximum number of component carriers (CCs) per UL/DL; or its preference for the concerned band(s) or band combination(s) based on a band-filter list configured by network.

In a long term evolution (LTE) system, in order to optimize wireless local area network (WLAN) and **LTE** operation, RAN assisted WLAN interworking feature is introduced. It supports bidirectional traffic steering between evolved universal terrestrial radio access network (E-UTRAN) and WLAN for UEs in RRC_IDLE and RRC_CONNECTED. E-UTRAN provides assistance parameters via broadcast and dedicated RRC signaling to the UE. The RAN assistance parameters may include E-UTRAN signal strength thresholds, WLAN channel utilization thresholds, WLAN backhaul data rate thresholds, WLAN signal strength thresholds and Offload Preference Indicator (OPI). E-UTRAN can also provide a list of WLAN identifiers to the UE via broadcast signaling. The UE can use the RAN assistance parameters in the evaluation of: access network selection and traffic steering rules defined in technical standard (TS) 36.304; or access network discovery and selection function (ANDSF) policies defined in TS 24.312 for traffic steering decisions between E-UTRAN and WLAN.

If the UE is provisioned with ANDSF policies it shall forward the received RAN assistance parameters to upper layers, otherwise it shall use them in the access network selection and traffic steering rules defined in clause 23.6.2 and in TS 36.304. The access network selection and traffic steering rules defined in clause 23.6.2 and in TS 36.304 are applied only to the WLANs of which identifiers are provided by the E-UTRAN.

The UE in RRC_CONNECTED can apply the parameters obtained via dedicated signaling if they have been received from the serving cell; otherwise, the UE can apply the parameters obtained via broadcast signaling. The UE in RRC_IDLE can keep and apply the parameters obtained via dedicated signaling, until selection and/or reselection of another cell than the one where these parameters were received or a timer has expired since the UE entered RRC_IDLE upon which the UE can apply the parameters obtained via broadcast signaling.

Accordingly, in the dual protocol stack, it may be challenging to coordinate capabilities between NR and 6G RAT, since the connections are expected to be independent and minimal coordination and interaction are expected between NR gNBs and 6G nodes. However, from the UE's perspective, coordination between NR and 6G would be required because some capabilities are affected depending on operation in both RATs (e.g., whether both RATs are operated, how much data is transmitted/received, how many RF chains or antennas are used in each RAT, or the like).

Reusing MUSIM may be one possible approach, but there is no detailed proposal to do so, and it may be suboptimal because the situation may be different. For example, in MUSIM operation, there is no CN involvement, such that the connections to two networks are independent in CN. For example, it may look like that there are two different users in CN although CN can be connected to both RATs/gNBs. In dual protocol stack, the CN can be aware of both connections via NR and 6G RAT, and the CN can determine data aggregation, splitting, and/or switching.

Embodiments of the present disclosure can provide for capability coordination between 5G NR and 6G RAT in dual protocol stack operation, as described in the examples of FIGS. 2-4, 5A, and 5B. Various embodiments may be designed differently, depending on the approach and the level of coordination considered. In addition, an embodiment considers new aspects of the dual protocol stack compared to existing operations, including network assisted coordination that leverages CN awareness of two connections, as well as the supported service and data rate over NR and 6G RAT.

Before describing the disclosed methods for capability coordination in the examples of FIGS. 2-4, 5A, and 5B, let us first consider the capabilities that can potentially be shared between two RATs (i.e. NR and 6G RAT), such as RF chains, baseband modules, and maximum transmission power.

With regard to RF chains, similar to **LTE** and NR, if the NR and 6G RAT utilize similar frequency ranges, an RF chain may be shared between them. Such sharing could affect the supported frequency bands (e.g., the supported frequency bands in one RAT may change depending whether the other RAT is used). As a result, the supported number of CCs and/or band combinations in one RAT may change depending whether the other RAT is active.

With regard to baseband modules, depending on the implementation, some baseband modules (e.g., encoder, modulator, demodulator, or the like) may be shared between the NR and 6G RAT. Moreover, support of NR and 6G RAT can be limited by the UE's overall processing capability and memory usage. Sharing of baseband modules could affect the number of CCs per UL and DL, the supported band combinations, supported channel bandwidth, MIMO capabilities, and the like.

With regard to maximum transmission power, if the power amplifier is shared or transmission power is restricted with specific absorption rate (SAR), the maximum transmission power of each RAT may depend on whether the other RAT is operated, and on how much power is used in the other RAT. The transmission power can be divided between the NR and 6G RAT in the power domain (e.g., by reducing the maximum transmission power so it is limited across the two RATs) or the time domain (e.g., by allowing uplink transmission for the two RATs in different time slots).

The disclosed embodiments include various approaches to capability coordination between NR and 6G RAT, as described in the examples of FIGS. 2-4, 5A, and 5B. In accordance with the above discussion, the disclosed methods may be used for coordination of capabilities such as RF chains, baseband modules, and transmission power. However, in various embodiments, the disclosed coordination framework may be applicable to any capabilities requiring coordination, and are not limited by the present disclosure.

FIG. 2 is a communication flow diagram illustrating an example method 200 for coordination of UE capabilities by UE capability restriction, according to an embodiment. The method 200 may be performed by a 6G RAT node 202, a UE 204, and an NR gNB 206 (e.g., a 5G NR gNB 206). For example, the UE 204 may correspond to the electronic device 601 of FIG. 6, the UE 705 of FIG. 7, and/or the UE 158 of FIG. 1B, and is not limited by the present disclosure. In some examples, the UE 204 may be a 6G-capable and/or 5G-capable UE, and may be a MUSIM-capable device. For example, in some embodiments, method 200 may involve MUSIM-like coordination. The 5G NR gNB 206 may correspond to the gNB 710 of FIG. 7 and/or the gNB 154 of FIG. 1B, and is not limited by the present disclosure. The 6G RAT node 202 may correspond to the 6G RAT node 152 of FIG. 1B, and is not limited by the present disclosure.

In an embodiment, the method 200 can rely on implementation by the UE 204, for example by indicating restriction of capabilities. For example, the UE 204 can provide the information about capabilities (e.g., resources), and can make the determination about capability restriction. Accordingly, the method 200 may be primarily a UE-side implementation of the disclosed methods for coordination of UE capabilities for dual protocol stack. In the case of NR, existing UE assistance information (UAI) may be reused.

The same UAI signaling can be applied for 6G RAT. That is, a 6G-capable UE can send UAI to the 6G RAT node 202 to indicate a preference of temporary capability restriction. The contents of such a capability restriction preference can include the above-described capabilities that may be shared between NR and 6G RAT. Alternatively or additionally, in some embodiments, a more advanced mechanism may be implemented. For example, instead of sending UAI with the restricted capabilities, the UE 204 can send updated UE capability reporting. In NR, this is not allowed because UE capabilities are considered practically static, and it is stored in the CN after the UE 204 sends it in response to a UE capability inquiry. Consequently, the restricted capabilities can be indicated via UAI. However, UAI may not be optimal, as UAI may include limited and simplified information. The UE 204 can provide a new UE capability report with restricted capabilities. Alternatively, the UE 204 can send a delta information, e.g., it can indicate UE capabilities which requires temporary restriction due to dual protocol stack operation.

The example signaling flow is illustrated in FIG. 2. Referring to FIG. 2, the method 200 may begin with the UE 204 being connected 208 to the 5G NR gNB 206.

In addition, the UE 204 can be connected 210 to the 6G RAT node 202. In some examples, UE 204 may be connected 210 to the 6G RAT node 202 prior to the UE 204 being connected 208 to the 5G NR gNB 206, and is not limited by the present disclosure.

Next, the UE 204 can check 212 whether the NR capability should be restricted. In various embodiments, checking 212 whether the NR capability should be restricted can be proactive or reactive. In case checking 212 is proactive, the UE 204 can temporarily determine capability restriction even before the UE 204 is connected to the 6G RAT node 202. For example, the UE 204 can internally identify that a higher data rate is needed or that the UE 204 is within cell coverage of the 6G RAT node 202 based on cell selection and/or reselection in 6G RAT frequencies. In case checking 212 is reactive, the UE 204 can determine, based on RRC connection, a setup message or RRC connection reconfiguration.

In some examples, checking 212 whether the NR capability should be restricted can include determining capabilities associated with the 5G NR gNB 206. For example, the UE 204 can determine a data rate and/or a signal strength of the 5G NR gNB 206, for example based on the initial connection 202 to the 5G NR gNB 206. The UE 204 can determine a temporary capability restriction preference 214 based on the determined capabilities.

Next, if it is necessary to restrict the capabilities of UE 204, the UE 204 can send the determined temporary capability restriction preference 214 to the 5G NR gNB 206. For example, the UE 204 can send temporary capability restriction preference 214 by transmitting a UAI message.

Next, the 5G NR gNB 206 may provide RRC reconfiguration 216 in order to restrict the capabilities of UE 204, as preferred by the UE 204. For example, the 5G NR gNB 206 may provide RRC reconfiguration 216 in response to receiving the temporary capability restriction preference 214.

Next, if the 5G NR gNB 206 does not allow capability restriction or the UE 204 determines NR needs to utilize more capabilities (e.g., due to higher data rate or channel status), the UE 204 can also decide 218 to restrict the capabilities of the 6G RAT node 202.

In an example, since the 6G RAT may support a higher data rate than the 5G NR, the UE 204 can accordingly decide 218 that a majority of its antennas should be allocated for use with the 6G RAT.

In some examples, deciding 218 whether to restrict the capabilities of the 6G RAT node 202 can include determining the capabilities of the 6G RAT node 202. For example, the UE 204 can determine a data rate and/or a signal strength of the 6G RAT node 202, for example based on the initial connection 208 to the 6G RAT node 202. The UE 204 can determine UAI or updated capability reporting 220 based on the determined capabilities.

Next, once the UE 204 (e.g., a 6G capable UE) decides to reduce 6G RAT capabilities, the UE 204 can send either the UAI or updated capability reporting 220 of UE 204 to the 6G RAT node 202 via a 6G RRC.

Finally, the 6G RAT node 202 may provide RRC reconfiguration 222 to the UE 204, so as to restrict capabilities of the UE 204, as preferred by UE 204. For example, the 6G RAT node 202 may provide RRC reconfiguration 222 in response to receiving the UAI or updated capability reporting 220.

In some embodiments, new assistance information (e.g., UAI) may also be provided to both the NR and 6G RAT networks. For example, such assistance information may include the reason (e.g., cause) for the capability restriction. In NR, capability restriction due to 6G RAT may still be based on MUSIM operation. Because this MUSIM can be used commonly, it may be either 4G or 5G. Accordingly, since the disclosed system adds the 6G RAT, it may be useful if the UE 204 indicates the cause of capability restriction by indicating the particular type of RAT (e.g., 4G, 5G, 6G).

The method 200 can then end.

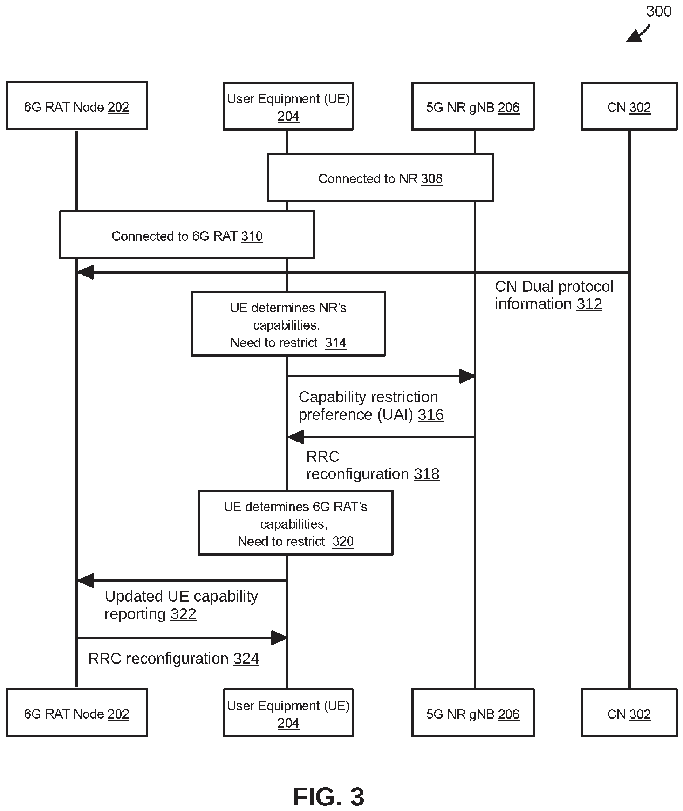

FIG. 3 is a communication flow diagram illustrating an example method 300 for coordination of UE capabilities by CN-based UE capability restriction, according to an embodiment. The method 300 may be performed by a 6G RAT node 202, a UE 204, an NR gNB 206 (e.g., 5G NR gNB 206), and a CN 302 (e.g., a 5GC, evolved 5GC, or 6GC). For example, the UE 204 may correspond to the electronic device 601 of FIG. 6, the UE 705 of FIG. 7, and/or the UE 158 of FIG. 1B, and is not limited by the present disclosure. In some examples, the UE 204 may be a 6G-capable and/or 5G-capable UE. The 5G NR gNB 206 may correspond to the gNB 710 of FIG. 7 and/or the gNB 154 of FIG. 1B, and is not limited by the present disclosure. The 6G RAT node 202 may correspond to the 6G RAT node 152 of FIG. 1B, and is not limited by the present disclosure.

In some embodiments, the method 300 may be similar to the method 200 of FIG. 2, except that the NW (e.g., the CN 302) can directly provide information used by the UE 204 to determine how the capabilities (e.g., resources) of UE 204 should be divided between the 5G NR and 6G RAT. For example, since the CN 302 is responsible for traffic control, such as traffic splitting and/or steering, the method 300 can provide enhanced UE capability coordination and/or restriction between the 5G NR and 6G RAT for dual protocol by using assistance from CN 302. The CN 302 should be able to determine (e.g., be aware) whether the UE 204 is in dual protocol stack operation. In addition, the CN 302 may be aware what capabilities would be required in each RAT during dual protocol stack operation.

In the method 300, similar to the case of **LTE** WLAN interworking, the NW (e.g., CN 302) can provide assistance information to UE 204. In **LTE** WLAN interworking, the NW can provide a network selection and policy. However, unlike LTE-WLAN interworking, in the method 300, CN 302 can provide more detailed information on how UE capabilities are allocated and restricted in the 6G RAT over 5G NR, and in the 5G NR over the 6G RAT.

An example signaling flow is illustrated in FIG. 3. Referring to FIG. 3, the method 300 may begin with the UE 204 being connected 308 to the 5G NR gNB 206.

In addition, the UE 204 can be connected 310 to the 6G RAT node 202. In some examples, UE 204 may be connected 310 to the 6G RAT node 202 prior to the UE 204 being connected 308 to the 5G NR gNB 206, and is not limited by the present disclosure.

Next, the CN 302 can send CN dual protocol information 312 (e.g., provide assistance information) to UE 204. As described above, the operation 312 may be the main difference between method 300 and method 200 of FIG. 2. In some embodiments, the CN dual protocol information 312 can be provided via non-access stratum (NAS) signaling or via RRC signaling if CN 302 provides assistance information to the 5G NR gNB 206 and/or 6G RAT node 202.

In various examples, the assistance information may include one of more of: a recommended split ratio of capabilities, a target data rate in each RAT (absolute or relative value), a priority between NR and 6G RAT, a target service in each RAT, or cell quality based on a threshold. Alternatively or additionally, the assistance information may include other information, and is not limited by the present disclosure.

With regard to the recommended split ratio of capabilities, in some examples the UE 204 can determine UE capabilities based on a split ratio included in the CN dual protocol information 312. The split ratio may indicate how the NR and 6G RAT resources are divided. In one example, the CN dual protocol information 312 may indicate to divide evenly, assuming the original UE capabilities are 100% for each RAT. In this case, the UE 204 may limit the overall UE capabilities by half and send capability restriction indication or updated UE capabilities to the 5G NR gNB 206 and 6G RAT node 202 separately.

With regard to the target data rate in each RAT (absolute or relative value), in some examples the CN dual protocol information 312 can include a target maximum data rate for each RAT. Since the CN 302 can be aware of the peak data rate that UE 204 can support via UE capability reporting, the CN 302 may provide the target data rate compared to its own maximum peak data rate. Based on the target data rate, the UE 204 can determine whether capability restriction is required, and if so, how the capabilities should be restricted. For example, UE 204 may support 1 Gbps for the NR and 5 Gbps for the 6G RAT. If the CN dual protocol information 312 provides a target data rate of 100 Mbps for NR and 3 Gbps for 6G RAT, the UE 204 can reduce its own capabilities for each RAT considering the indicated target data rate.

With regard to the priority between NR and 6G RAT, in some examples the CN dual protocol information 312 can indicate which RAT should be prioritized. In this case, the UE 204 may reduce capabilities for the lower priority RAT. The UE 204 may send a capability restriction preference and/or updated UE capability to nodes of the lower priority RAT only.

With regard to the target service in each RAT (e.g., voice only, voice and data, or data only), in some examples, dual protocol stack can be used to ensure continuous voice support over 5G while 6G is used for data boost. In the beginning of deployment, the 6G cell may not have full coverage. In this case, more frequent inter-RAT HO is required if the UE is connected to 6G, which would especially reduce voice quality, since it is delay sensitive. If only voice is supported over NR and other data is supported over 6G RAT, it may be unnecessary to configure advanced UE capabilities for 5G connection.

With regard to cell quality (e.g., signal strength) based on a threshold, in some examples the CN dual protocol information 312 can include threshold information, such as a signal strength threshold. For example, resource efficiency may be enhanced by using additional carriers or more advanced MIMO operations when channel conditions are favorable. Accordingly, depending on the current channel conditions in the NR and 6G RAT, the UE 204 can determine which RAT should be restricted and how many capabilities should be restricted. For example, based on the threshold information, the UE 204 can choose a RAT having a signal strength better than the threshold, or in response to the other RAT's signal strength being worse than the threshold.

Next, the UE 204 can check 314 whether the NR capability should be restricted based on the assistance information provided by the CN 302. In various embodiments, checking 314 whether the NR capability should be restricted can be proactive or reactive, as in the example of FIG. 2 above.

Next, if it is necessary to restrict the capabilities of UE 204, the UE 204 can send temporary capability restriction preference 316 (e.g., a UAI message) to the 5G NR gNB 206. If it is necessary to reduce more than basic support of the RAT, the temporary capability restriction preference 316 may also indicate to release the connection between UE 204 and 5G NR gNB 206.

Next, the 5G NR gNB 206 may provide RRC reconfiguration 318 in order to restrict the capabilities of UE 204, as preferred by the UE 204.

Next, if the 5G NR gNB 206 does not allow capability restriction or the UE 204 determines NR needs to utilize more capabilities (e.g., due to higher data rate or channel status), the UE 204 can also decide 320 to restrict the capabilities of the 6G RAT node 202.

Next, once the UE 204 (e.g., a 6G capable UE) decides to reduce 6G RAT capabilities, the UE 204 can send either UAI or updated capability reporting 322 of UE 204 to the 6G RAT node 202 via a 6G RRC.

Finally, the 6G RAT node 202 may provide RRC reconfiguration 324 to the UE 204, so as to restrict capabilities of the UE 204, as preferred by UE 204.

The method 300 can then end.

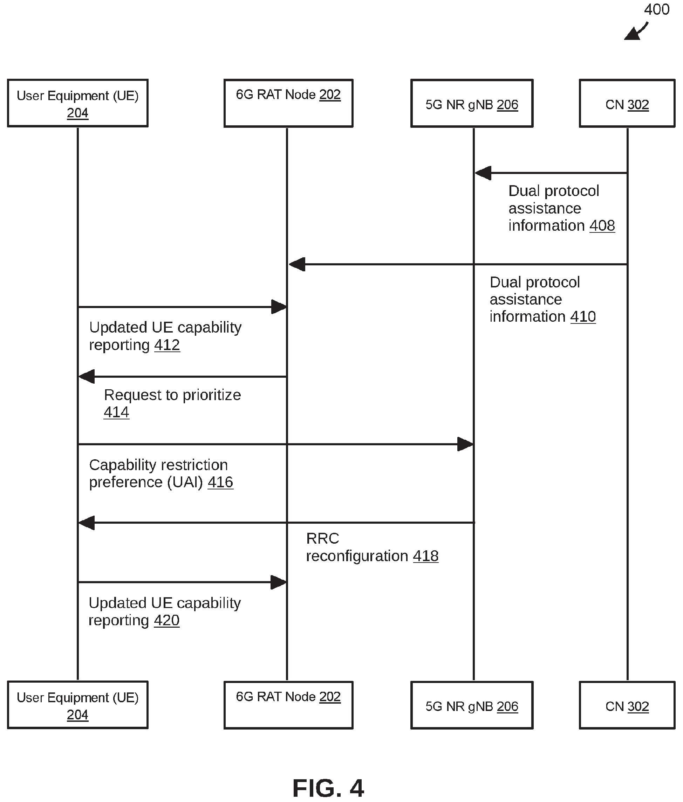

FIG. 4 is communication flow diagram illustrating an example method 400 for coordination of UE capabilities by RAN controlled UE capability restriction, according to an embodiment. The method 400 may be performed by a 6G RAT node 202, a UE 204, an NR gNB 206 (e.g., 5G NR gNB 206), and a CN 302 (e.g., a 5GC, evolved 5GC, or 6GC). For example, the UE 204 may correspond to the electronic device 601 of FIG. 6, the UE 705 of FIG. 7, and/or the UE 158 of FIG. 1B, and is not limited by the present disclosure. In some examples, the UE 204 may be a 6G-capable and/or 5G-capable UE. The 5G NR gNB 206 may correspond to the gNB 710 of FIG. 7 and/or the gNB 154 of FIG. 1B, and is not limited by the present disclosure. The 6G RAT node 202 may correspond to the 6G RAT node 152 of FIG. 1B, and is not limited by the present disclosure.

In the embodiment of method 400, the 5G NR gNB 206 and 6G RAT node 202 can determine whether to restrict the capabilities of UE 204, based on information provided by the CN 302. For example, since CN 302 is responsible for traffic control, the CN 302 can provide its own suggestion to the 5G NR gNB 206 and 6G RAT node 202, as described below. Based on the information provided by CN 302, the 5G NR gNB 206 and 6G RAT node 202 may decide whether their respective RATs need to utilize full capabilities. In addition, the CN 302 could also decide which RAT should be used more to boost the data rate.

An example signaling flow is illustrated in FIG. 4. Referring to FIG. 4, the method 400 may begin with the CN 302 providing dual protocol assistance information 408 to the 5G NR gNB 206. In an example, the dual protocol assistance information 408 may include a determination made by CN 302 on capability restriction of UE 204.

Next, the CN 302 can provide dual protocol assistance information 410 to the 6G RAT node 202. For example, the dual protocol assistance information 410 may also include the determination of CN 302 on capability restriction of UE 204.

Next, when the UE 204 is connected to both the 6G RAT node 202 and 5G NR gNB 206, in an example, the UE 204 may send updated UE capability reporting 412 to the 6G RAT node 202 in order to restrict the 6G RAT capabilities.

Next, if the 6G RAT is prioritized higher, for example if the dual protocol assistance information 410 of CN 302 includes a determination to utilize more traffic over the 6G RAT, the 6G RAT node 202 may reject the updated UE capability reporting 412. For example, 6G RAT node 202 may send a request 414 for UE 204 to prioritize the 6G RAT. In some examples, the request 414 may include a determination whether to utilize full capabilities and/or whether to restrict the capabilities for the associated RAT.

Next, in an example, if the UE 204 accepts the request 414 to prioritize the 6G RAT, the UE 204 can send a capability restriction preference 416 (e.g., UAI) to the 5G NR gNB 206 in order to restrict the NR capabilities.

Next, once the 5G NR gNB 206 accepts the capability restriction preference 416, the 5G NR gNB 206 can reconfigure the NR connection. For example, the 5G NR gNB 206 can send RRC reconfiguration 418 to UE 204.

Next, the UE 204 can increase UE capability for the 6G RAT. Accordingly, UE 204 can send another updated UE capability reporting 420 to 6G RAT node 202.

The method 400 can then end.

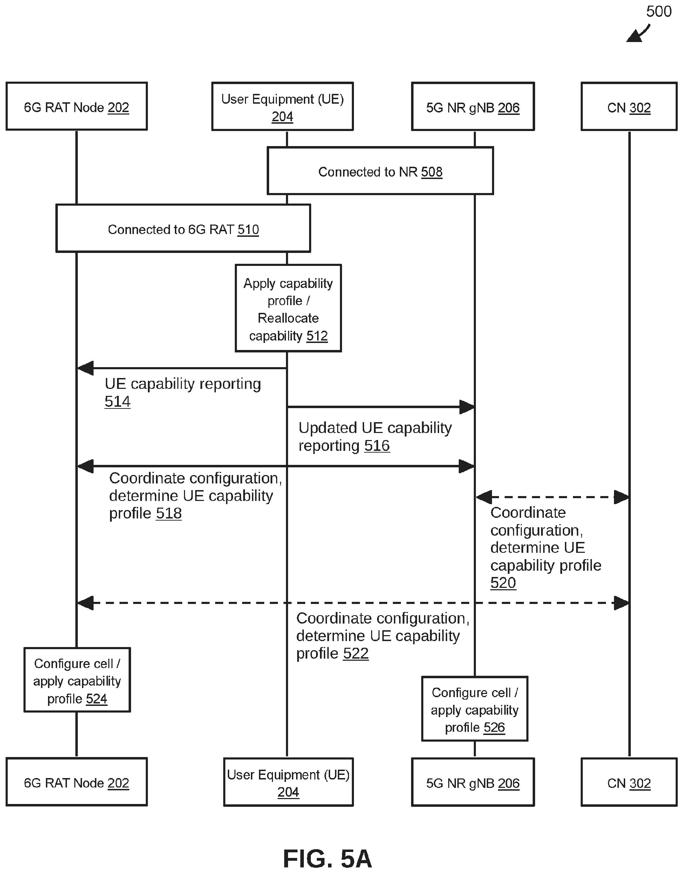

FIG. 5A is a communication flow diagram illustrating an example method 500 for coordination of UE capabilities using a multi-profile of UE capabilities, according to an embodiment. In this example, the UE can provide capability signaling, which can include a multi-profile (e.g., a set) of UE capabilities, such as conditional or event-based UE capabilities.

The method 500 may be performed by a 6G RAT node 202, a UE 204, an NR gNB 206 (e.g., 5G NR gNB 206), and a CN 302 (e.g., a 5GC, evolved 5GC, or 6GC). For example, the UE 204 may correspond to the electronic device 601 of FIG. 6, the UE 705 of FIG. 7, and/or the UE 158 of FIG. 1B, and is not limited by the present disclosure. In some examples, the UE 204 may be a 6G-capable and/or 5G-capable UE, and may be a MUSIM-capable device. The 5G NR gNB 206 may correspond to the gNB 710 of FIG. 7 and/or the gNB 154 of FIG. 1B, and is not limited by the present disclosure. The 6G RAT node 202 may correspond to the 6G RAT node 152 of FIG. 1B, and is not limited by the present disclosure.

In an embodiment, the UE 204 can provide a multi-profile of UE conditional (or event based) capabilities based on whether or not 5G and 6G are concurrently used. For example, in 5G NR, the UE 204 can provide two profiles: one for standalone NR and one for the limited NR capabilities for dual protocol stack. The same can be true for 6G RAT. For example, a 6G-capable UE can send two profiles (e.g., UE capability set and/or container); one for 6G RAT standalone capabilities (e.g., when the UE 204 is connected to 6G RAT only) and the other is for 6G RAT capabilities when dual protocol stack is applied. The UE 204 can provide a multi-profile of UE capabilities in UE capability inquiry procedure.

In both UE and NW, one and the same profile of UE capabilities should be applied and assumed in order to avoid mismatch on UE and NW's expectation on UE capabilities. In order to synchronize between UE and NW on the applied profile, a certain rule can be defined.

As a possible way to define a rule, one approach is that the profile change is based on whether a 5G/6G cell is added or 5G/6G is released. These events are used to determine how the capabilities are divided between 5G and 6G.

Referring to FIG. 5A, the UE 204 can be connected 508 to the 5G NR gNB 206 and connected 510 to the 6G RAT node 202.

Next, the UE 204 can apply a capability profile and/or reallocate its capabilities 512. In the case of a multi-profile, in various embodiments, there are two methods to synchronize the profile used by the UE 204 with the profile used by the 5G NR gNB 206 and/or the 6G RAT node 202. In a first embodiment, the profile may be synchronized implicitly, based on release and/or connection of the other one of 5G NR gNB 206 or 6G RAT node 202. In a second embodiment, the profile may be synchronized explicitly by sending UAI or a UE capability update.

Next, the UE 204 can send capability reports 514 and 516 to the 6G RAT node 202 and 5G NR gNB 206, respectively. In a particular example of MIMO layers, the UE 204 can indicate via capability signaling that it supports 8 MIMO layers if only 5G is used. If dual protocol stack of 5G and 6G is used, the number of supported MIMO layers can instead be 4 for each cell (e.g., for the 5G and 6G cells) in the same band. For example, in some embodiments, the profile used by the UE 204 may be synchronized with the profile used by the 5G NR gNB 206 and/or the 6G RAT node 202 via capability reports 514 and/or 516. Alternatively or additionally, in some embodiments, the profile used may be synchronized implicitly, based on release and/or connection of the other one of 5G NR gNB 206 or 6G RAT node 202. In one possible example, the profile used by the UE 204 may be explicitly synchronized with the profile used by the 5G NR gNB 206 via capability report 514, and then implicitly synchronized with the profile used by 6G RAT node 202 based on release and/or connection of 5G NR gNB 206.

Next, the 5G NR gNB 206 and 6G RAT node 202 can communicate so as to coordinate 518 their configurations, e.g., to inform each other whether they will configure both the 5G and 6G cells concurrently. In various examples, the 5G NR gNB 206 and 6G RAT node 202 can coordinate 518 their configurations directly, and/or through the CN 302. For example, the 5G NR gNB 206 can communicate 520 its configuration with the CN 302, and the 6G RAT node 202 can receive 522 the configuration of 5G NR gNB 206 from CN 302. Alternatively or additionally, the 6G RAT node 202 can communicate 522 its configuration with the CN 302, and the 5G NR gNB 206 can receive 520 the configuration of 5G NR gNB 206 from CN 302.

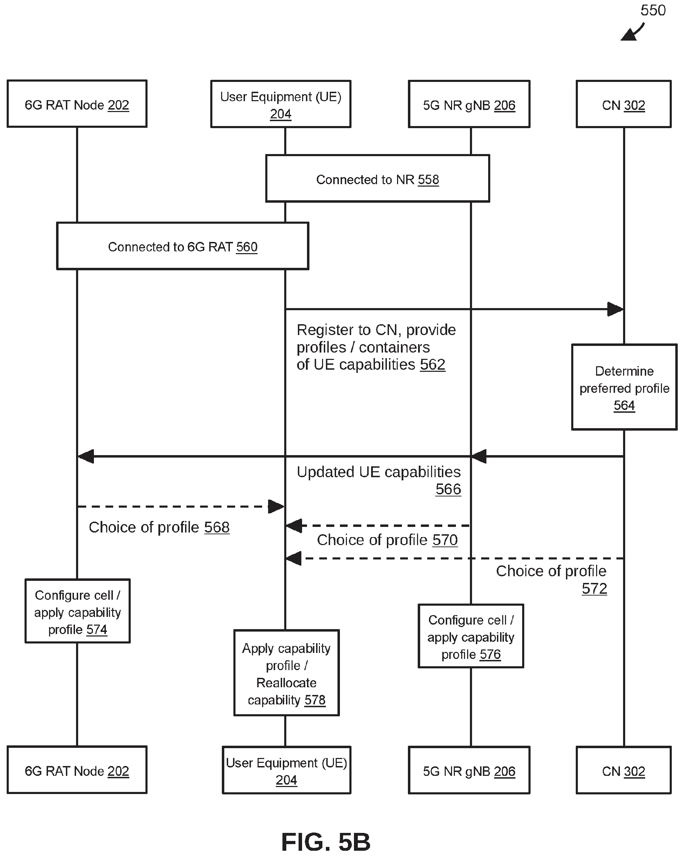

In the example of method 500, the UE 204 can determine, based on the multi-profile (e.g., set) of UE capabilities, a profile of UE capabilities (e.g., at least one UE capability) to be used. As described above, the choice of profile can be indicated explicitly via UAI or a UE capability update, or implicitly based on release and/or connection. In another example, the CN 302 can determine the profile of UE capabilities to be used. This case will be described below in the example of FIG. 5B..

Finally, the 6G RAT node 202 can configure the respective 6G RAT cell and/or apply the capability profile 524. Likewise, the 5G NR gNB 206 can configure the respective 5G NR cell and/or apply the capability profile 526. These operations may be performed by the 5G NR gNB 206, 6G RAT node 202, and UE 204 in any order and/or concurrently, and are not limited by the present disclosure.

Continuing the particular example of MIMO layers, if only the 5G cell is configured, the 5G NR gNB 206 can configure this cell with all 8 layers via (maxMIMO-Layers in PDSCH-ServingCellConfig). Later, the 6G RAT node 202 can decide to activate the 6G cell in the same band. The 6G RAT node 202 (e.g., base station) needs to inform the 5G NR gNB 206 that a 6G cell will be activated.

In this example, when this event occurs, the 5G NR gNB 206 can apply 526 the UE capability profile associated to dual protocol stack. The 5G NR gNB 206 can also infer that it should reduce the number MIMO layers on the 5G cell to 4, and reconfigure the 5G cell. Also, when this addition of the 6G cell occurs, the UE 204 can infer that it should apply 512 the UE capability profile associated to dual protocol stack for both 5G and 6G.

Subsequently, if the 6G base station decides to release the 6G cell, then 5G NR gNB 206 can be informed. The 5G NR gNB 206 can then apply 526 the UE capability profile associated to standalone NR and can infer it can boost the number of layers to 8 again.

The UE 204 can also reallocate its capability, so as to be ready to receive the 5G cell with up to 8 MIMO layers.

In the example of method 500, the UE 204 may not need to transmit UAI, thus providing network flexibility. This solution may be beneficial to the features that are configured on the cell level PXSCH-ServingCellConfig, such as the number of layers, and enabling processing capability, so as to minimize the amount of communication required between 5G NR gNB 206 and 6G RAT node 202 (either directly or through the CN 302).

Alternatively, the event triggering can be informed by the UE 204 if there is no interface or signaling between 5G NR gNB 206 and 6G RAT node 202. For example, when the 6G connection is established 510 or when the 6G cell is added, the UE 204 can indicate this event to the 5G NR gNB 206, and 5G NR gNB 206 can apply 526 a profile of UE capabilities for dual protocol stack. There might be multiple profiles for dual protocol stack, e.g., based on the support data rate or service type in 5G or in 6G. The UE 204 could indicate the exact profile that 5G NR gNB 206 or 6G RAT node 202 should apply, or the UE 204 could indicate a specific event or target, such as a target data rate or service type.

The method 500 can then end.

Alternatively, in another embodiment, the decision of which profile of UE capabilities is used can be decided by the CN 302. FIG. 5B is a communication flow diagram illustrating an example method 550 for coordination of UE capabilities by a CN using a multi-profile of UE capabilities, according to an embodiment. The method 550 may be performed by a 6G RAT node 202, a UE 204, an NR gNB 206 (e.g., 5G NR gNB 206), and a CN 302 (e.g., a 5GC, evolved 5GC, or 6GC).

Referring to FIG. 5B, the UE 204 can be connected 558 to the 5G NR gNB 206 and connected 560 to the 6G RAT node 202.

Next, when the UE 204 registers 562 to the 5G and/or 6G CN 302, the UE 204 can provide all the profiles (or containers) of the multi-profile of UE capabilities to CN 302.

When dual protocol stack feature is enabled, the CN 302 can determine 564 the preferred profile for the NR or 6G RAT considering how to split the data rate or to allocate radio bearer or channel status (if reported by gNB or 6G RAT nodes). Accordingly, the CN 302 can determine 564 a profile (e.g., at least one capability) to be used of the multi-profile of UE capabilities.

Next, the CN 302 can enable the dual protocol stack feature. At the same time, the CN 302 can send the updated UE capabilities 566 to the 5G NR gNB 206 and the 6G RAT node 202.

Next, the CN 302, 5G NR gNB 206, and/or the 6G RAT node 202 can indicate to the UE 204 which profile is assumed. For example, the 6G RAT node 202 can send the choice of profile 568 to the UE 204, the 5G NR gNB 206 can send the choice of profile 570 to the UE 204, and/or the CN 302 can send the choice of profile 572 to the UE 204.

Finally, the 6G RAT node 202 can configure the respective 6G RAT cell and/or apply the capability profile 574. Likewise, the 5G NR gNB 206 can configure the respective 5G NR cell and/or apply the capability profile 576. Similarly, the UE 204 can apply the capability profile and/or reallocate capabilities 578. These operations may be performed by the 5G NR gNB 206, 6G RAT node 202, and UE 204 in any order and/or concurrently, and are not limited by the present disclosure.

The method 550 can then end.

FIG. 6 is a block diagram of an electronic device in a network environment 600, according to an embodiment.

Referring to FIG. 6, an electronic device 601 in a network environment 600 may communicate with an electronic device 602 via a first network 698 (e.g., a short-range wireless communication network), or an electronic device 604 or a server 608 via a second network 699 (e.g., a long-range wireless communication network). The electronic device 601 may communicate with the electronic device 604 via the server 608. The electronic device 601 may include a processor 620, a memory 630, an input device 650, a sound output device 655, a display device 660, an audio module 670, a sensor module 676, an interface 677, a haptic module 679, a camera module 680, a power management module 688, a battery 689, a communication module 690, a SIM card 696, or an antenna module 697. In one embodiment, at least one (e.g., the display device 660 and/or the camera module 680) of the components may be omitted from the electronic device 601, or one or more other components may be added to the electronic device 601. Some of the components may be implemented as a single integrated circuit (IC). For example, the sensor module 676 (e.g., a fingerprint sensor, an iris sensor, or an illuminance sensor) may be embedded in the display device 660 (e.g., a display).

The processor 620 may execute software (e.g., a program 640) to control at least one other component (e.g., a hardware and/or a software component) of the electronic device 601 coupled with the processor 620 and may perform various data processing or computations.

As at least part of the data processing or computations, the processor 620 may load a command or data received from another component (e.g., the sensor module 676 or the communication module 690) in volatile memory 632, process the command or the data stored in the volatile memory 632, and store resulting data in non-volatile memory 634. The processor 620 may include a main processor 621 (e.g., a central processing unit (CPU) or an application processor (AP)), and an auxiliary processor 623 (e.g., a graphics processing unit (GPU), an image signal processor (ISP), a sensor hub processor, or a communication processor (CP)) that is operable independently from, or in conjunction with, the main processor 621. Additionally or alternatively, the auxiliary processor 623 may be adapted to consume less power than the main processor 621, or execute a particular function. The auxiliary processor 623 may be implemented as being separate from, or a part of, the main processor 621.

The auxiliary processor 623 may control at least some of the functions or states related to at least one component (e.g., the display device 660, the sensor module 676, and/or the communication module 690) among the components of the electronic device 601, instead of the main processor 621 while the main processor 621 is in an inactive (e.g., sleep) state, or together with the main processor 621 while the main processor 621 is in an active state (e.g., executing an application). The auxiliary processor 623 (e.g., an image signal processor or a communication processor) may be implemented as part of another component (e.g., the camera module 680 or the communication module 690) functionally related to the auxiliary processor 623.

The memory 630 may store various data used by at least one component (e.g., the processor 620 and/or the sensor module 676) of the electronic device 601. The various data may include, for example, software (e.g., the program 640) and input data or output data for a command related thereto. The memory 630 may include the volatile memory 632 or the non-volatile memory 634. Non-volatile memory 634 may include internal memory 636 and/or external memory 638.

The program 640 may be stored in the memory 630 as software, and may include, for example, an operating system (OS) 642, middleware 644, or an application 646.

The input device 650 may receive a command or data to be used by another component (e.g., the processor 620) of the electronic device 601, from the outside (e.g., a user) of the electronic device 601. The input device 650 may include, for example, a microphone, a mouse, or a keyboard.

The sound output device 655 may output sound signals to the outside of the electronic device 601. The sound output device 655 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 660 may visually provide information to the outside (e.g., a user) of the electronic device 601. The display device 660 may include, for example, a display, a hologram device, or a projector and control circuitry to control a corresponding one of the display, hologram device, and projector. The display device 660 may include touch circuitry adapted to detect a touch, or sensor circuitry (e.g., a pressure sensor) adapted to measure the intensity of force incurred by the touch.

The audio module 670 may convert a sound into an electrical signal and vice versa. The audio module 670 may obtain the sound via the input device 650 or output the sound via the sound output device 655 or a headphone of an external electronic device 602 directly (e.g., wired) or wirelessly coupled with the electronic device 601.

The sensor module 676 may detect an operational state (e.g., power or temperature) of the electronic device 601 or an environmental state (e.g., a state of a user) external to the electronic device 601, and then generate an electrical signal or data value corresponding to the detected state. The sensor module 676 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 677 may support one or more specified protocols to be used for the electronic device 601 to be coupled with the external electronic device 602 directly (e.g., wired) or wirelessly. The interface 677 may include, for example, a high- definition multimedia interface (HDMI), a universal serial bus (USB) interface, a secure digital (SD) card interface, or an audio interface.

A connecting terminal 678 may include a connector via which the electronic device 601 may be physically connected with the external electronic device 602. The connecting terminal 678 may include, for example, an HDMI connector, a USB connector, an SD card connector, or an audio connector (e.g., a headphone connector).

The haptic module 679 may convert an electrical signal into a mechanical stimulus (e.g., a vibration or a movement) or an electrical stimulus which may be recognized by a user via tactile sensation or kinesthetic sensation. The haptic module 679 may include, for example, a motor, a piezoelectric element, or an electrical stimulator.

The camera module 680 may capture a still image or moving images. The camera module 680 may include one or more lenses, image sensors, image signal processors, or flashes. The power management module 688 may manage power supplied to the electronic device 601. The power management module 688 may be implemented as at least part of, for example, a power management integrated circuit (PMIC).

The battery 689 may supply power to at least one component of the electronic device 601. The battery 689 may include, for example, a primary cell which is not rechargeable, a secondary cell which is rechargeable, or a fuel cell.

The communication module 690 may support establishing a direct (e.g., wired) communication channel or a wireless communication channel between the electronic device 601 and the external electronic device (e.g., the electronic device 602, the electronic device 604, or the server 608) and performing communication via the established communication channel. The communication module 690 may include one or more communication processors that are operable independently from the processor 620 (e.g., the AP) and supports a direct (e.g., wired) communication or a wireless communication. The communication module 690 may include a wireless communication module 692 (e.g., a cellular communication module, a short-range wireless communication module, or a global navigation satellite system (GNSS) communication module) or a wired communication module 694 (e.g., a local area network (LAN) communication module or a power line communication (PLC) module). A corresponding one of these communication modules may communicate with the external electronic device via the first network 698 (e.g., a short-range communication network, such as BLUETOOTH^{™}, wireless-fidelity (Wi-Fi) direct, or a standard of the Infrared Data Association (IrDA)) or the second network 699 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 692 may identify and authenticate the electronic device 601 in a communication network, such as the first network 698 or the second network 699, using subscriber information (e.g., international mobile subscriber identity (IMSI)) stored in the subscriber identification module 696.

The antenna module 697 may transmit or receive a signal or power to or from the outside (e.g., the external electronic device) of the electronic device 601. The antenna module 697 may include one or more antennas, and, therefrom, at least one antenna appropriate for a communication scheme used in the communication network, such as the first network 698 or the second network 699, may be selected, for example, by the communication module 690 (e.g., the wireless communication module 692). The signal or the power may then be transmitted or received between the communication module 690 and the external electronic device via the selected at least one antenna.

Commands or data may be transmitted or received between the electronic device 601 and the external electronic device 604 via the server 608 coupled with the second network 699. Each of the electronic devices 602 and 604 may be a device of a same type as, or a different type, from the electronic device 601. All or some of operations to be executed at the electronic device 601 may be executed at one or more of the external electronic devices 602, 604, or 608. For example, if the electronic device 601 should perform a function or a service automatically, or in response to a request from a user or another device, the electronic device 601, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 601. The electronic device 601 may provide the outcome, with or without further processing of the outcome, as at least part of a reply to the request. To that end, a cloud computing, distributed computing, or client-server computing technology may be used, for example.

FIG. 7 shows a system including a UE 705 and a gNB 710, in communication with each other. The UE may include a radio 715 and a processing circuit (or a means for processing) 720, which may perform various methods disclosed herein, e.g., the method illustrated in FIG. 1. For example, the processing circuit 720 may receive, via the radio 715, transmissions from the network node (gNB) 710, and the processing circuit 720 may transmit, via the radio 715, signals to the gNB 710.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

## Claims

1. A method for coordinating user equipment, UE, capabilities for dual protocol stack, comprising:
connecting, by a UE (204), to a wireless network (150) configured for dual protocol stack, the dual protocol stack associated with new radio, NR, and sixth-generation, 6G, wireless protocols;
connecting (208, 210), by the UE (204) to an NR gNodeB, gNB, (206) and a 6G radio access technology, RAT, node (202) of the wireless network (150);
determining (212, 218), by the UE (204), information related to capability restriction of the UE (204), wherein the information related to the capability restriction pertains to the dual protocol stack; and
sending (214, 220), by the UE (204) to at least one of the NR gNB (206) and the 6G RAT node (202), the information related to the capability restriction of the UE (204), wherein the at least one of the NR gNB (206) and the 6G RAT node (202) uses the information to communicate with the UE (204).

2. The method of claim 1:
further comprising determining, by the UE (204), capabilities associated with the at least one of the NR gNB (206) and the 6G RAT node (202);
wherein determining (212, 218) the information related to the capability restriction further comprises determining (214), by the UE (204), a restriction preference based on the determined capabilities, and the information related to the capability restriction includes the determined restriction preference; and
further comprising receiving (216, 222), by the UE (204), at least one of a Radio Resource Control, RRC, reconfiguration from the NR gNB (206) and a second RRC reconfiguration from the 6G RAT node (202), in response to the information related to the capability restriction.

3. The method of claim 2, wherein the information related to the capability restriction of the UE (204) comprises UE assistance information, UAI, or a UE capability report.

4. The method of any one of claims 1 to 3:
wherein the information related to the capability restriction comprises a set of UE capabilities; and
further comprising configuring (524, 526; 574, 576), by the at least one of the NR gNB (206) and the 6G RAT node (202), at least one of an NR gNB cell associated with the NR gNB (206) and a 6G RAT cell associated with the 6G RAT node (202).

5. The method of claim 4, wherein configuring (524, 526;)the at least one of the NR gNB cell and the 6G RAT cell further comprises exchanging a message or communicating via a core network, CN, (302) between the NR gNB (206) and the 6G RAT node (202) regarding whether to configure the at least one of the NR gNB cell and the RAT cell.

6. The method of claim 4 or 5, wherein the set of UE capabilities comprises a profile of conditional or event-based UE capabilities.

7. The method of any one of claims 1 to 6, wherein the information related to the capability restriction comprises a set of UE capabilities; and
further comprising:
sending, by the UE (204) to a core network, CN, (302) the set of UE capabilities; and
determining, by the CN (302), at least one capability to be used of the set of UE capabilities.

8. The method of any one of claims 1 to 7, wherein the NR gNB (206) comprises a 5G NR gNB.

9. A method for coordination of user equipment, UE, capabilities for dual protocol stack, comprising:
sending dual protocol information, by a core network, CN, (302) of a wireless network (150) configured for dual protocol stack associated with new radio, NR, and sixth-generation, 6G, wireless protocols, to at least one of:
a UE (204);
an NR gNodeB, gNB, (206) of the wireless network (150); and
a 6G radio access technology, RAT, node (202) of the wireless network (150);
wherein the UE (204) is connected to the NR gNB (206) and the 6G RAT node (202).

10. The method of claim 9, wherein sending the dual protocol information comprises sending (312) the dual protocol information by the CN (302) to the UE (204); and
further comprising:
determining (314, 320), by the UE (204), capabilities associated with at least one of the NR gNB (206) and the 6G RAT node (202);
determining, by the UE (204), a restriction preference based on the determined capabilities and the dual protocol information;
sending (316, 416), by the UE (204) to the at least one of the NR gNB (206) and the 6G RAT node (202), UE assistance information, UAI, comprising the determined restriction preference; and
receiving (318, 418), by the UE (204), an RRC reconfiguration from at least one of the NR gNB (206) and a second RRC reconfiguration from the 6G RAT node (202), in response to the UAI.

11. The method of claim 10, wherein the dual protocol information comprises assistance information including at least one of:
a recommended split ratio of capabilities;
a target data rate in the at least one of the NR gNB (206) or the 6G RAT node (202);
a priority between NR and 6G RAT;
a target voice or data service for at least one of NR or 6G RAT; and
a threshold for signal strength or cell quality.

12. The method of any one of claims 9 to 11, wherein sending the dual protocol information comprises sending (408, 410) dual protocol assistance information, by the CN (302), to at least one of the NR gNB (206) and the 6G RAT node (202); and
further comprising:
sending, by the UE (204) to the at least one of the NR gNB (206) and the 6G RAT node (202), capability information;
determining, by the at least one of the NR gNB (206) and the 6G RAT node (202), whether to restrict capabilities for a respective associated RAT; and
receiving, by the UE (204) from the at least one of the NR gNB (206) and the 6G RAT node (202), a message based on the determination.

13. The method of claim 12, wherein sending the capability information comprises at least one of:
sending (412) updated UE capability reporting by the UE (204) to the 6G RAT node (202); and
sending (416) a capability restriction preference by the UE (204) to the NR gNB (206).

14. The method of claim 12 or 13, wherein the NR gNB (206) comprises a 5G NR gNB.

15. The method of any one of claims 12 to 14, wherein receiving the message based on the determination comprises at least one of:
receiving (414), by the UE (204) from the 6G RAT node (202), a request to prioritize; and
receiving (418), by the UE (204) from the NR gNB (206), an RRC reconfiguration.
